(19) Europäisches Patentamt / European Patent Office / Office européen des brevets

(11) **EP 2 992 585 B1**

(12) **FASCICULE DE BREVET EUROPEEN**

(45) Date de publication et mention
de la délivrance du brevet:
**31.05.2017 Bulletin 2017/22**

(21) Numéro de dépôt: **14727596.0**

(22) Date de dépôt: **29.04.2014**

(51) Int Cl.:
*H02J 7/14* (2006.01)  *B60L 11/18* (2006.01)
*H02J 7/02* (2016.01)  *B60L 15/00* (2006.01)

(86) Numéro de dépôt international:
**PCT/FR2014/051023**

(87) Numéro de publication internationale:
**WO 2014/177803 (06.11.2014 Gazette 2014/45)**

(54) **SYSTEME ET PROCEDE DE CHARGE DE LA BATTERIE D'UN VEHICULE ELECTRIQUE OU HYBRIDE**

SYSTEM UND VERFAHREN ZUM LADEN DES AKKUMULATORS EINES ELEKTRO- ODER HYBRIDFAHRZEUGS

SYSTEM AND METHOD FOR CHARGING THE BATTERY OF AN ELECTRIC OR HYBRID VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.05.2013 FR 1354043**

(43) Date de publication de la demande:
**09.03.2016 Bulletin 2016/10**

(73) Titulaire: **Renault S.A.S.**
**92100 Boulogne-Billancourt (FR)**

(72) Inventeurs:
• **KVIESKA, Pedro**
  **F-78000 Versailles (FR)**
• **MERIENNE, Ludovic**
  **F-91190 Gif sur Yvette (FR)**
• **REYSS, Olivier**
  **F-Montrouge 92120 (FR)**

(56) Documents cités:
FR-A1- 2 978 308    US-A1- 2011 001 456
US-A1- 2013 069 492

• SAEID HAGHBIN ET AL: "An Isolated High-Power Integrated Charger in Electrified-Vehicle Applications", IEEE TRANSACTIONS ON VEHICULAR TECHNOLOGY, IEEE SERVICE CENTER, PISCATAWAY, NJ, US, vol. 60, no. 9, 1 novembre 2011 (2011-11-01), pages 4115-4126, XP011388434, ISSN: 0018-9545, DOI: 10.1109/TVT.2011.2162258

**Description**

L'invention a pour domaine technique le contrôle de la charge des batteries de véhicules automobiles, en particulier la charge des batteries de véhicules électriques.

Le développement des véhicules électriques est un sujet plus que jamais d'actualité. Toutefois, la structure des chargeurs actuels demeure complexe et couteuse. Le développement de nouvelles topologies pourrait permettre de disposer de chargeurs moins coûteux que les solutions actuelles, à un niveau de prestation équivalent ou supérieur.

De l'état de la technique, on connait les documents suivants.

Le document EP2406098 divulgue un chargeur de batteries automobiles utilisant un abaisseur de tension couplé à un élévateur de tension.

Le document US 20120235605 divulgue un chargeur isolé utilisant des inductances en amont d'un onduleur suivi d'un transformateur. L'onduleur est utilisé comme redresseur de tension pour le transformateur.

On identifiera également le document US 2013/069492 A1 publié le 21 mars 2013 dont le système de charge diffère en la partie caractéristique de la revendication 1.

On identifiera enfin le document XP011388434 de Saeid Haghbin et al ("An Isolated High-Power Integrated Charger in Electrified-Vehicle Applications").

Il existe un besoin pour un système de charge plus compact et économique que les systèmes existants tout en disposant de performances au moins équivalentes.

Un objet de l'invention est un système de charge de la batterie d'un véhicule automobile muni d'au moins une chaine de traction électrique ou hybride. La chaine de traction comprend, lorsque le véhicule est en mouvement, une machine électrique connectée mécaniquement aux roues motrices et connectée électriquement à la batterie par l'intermédiaire d'un onduleur. Le système de charge comprend, lorsque le véhicule est en charge, la machine électrique et l'onduleur de la chaine de traction ainsi qu'un système de commande apte à commander l'onduleur de sorte que de l'énergie soit prélevée d'un réseau d'alimentation électrique à travers la machine électrique et à destination de la batterie, en générant des courants dans la machine électrique caractéristiques d'une rotation de la machine électrique à la fréquence du réseau d'alimentation électrique avec une force électromotrice correspondant à la tension du réseau d'alimentation électrique, tout en étant apte à commander la machine électrique de sorte à ne pas magnétiser son rotor, le réseau étant connecté directement ou par l'intermédiaire d'un filtre CEM aux phases de la machine électrique pour la charge, et déconnecté lors d'un fonctionnement en traction.

Le système peut comprendre un convertisseur continu-continu disposé entre l'onduleur et la batterie, et une capacité connectée en parallèle du convertisseur continu-continu, le convertisseur continu-continu étant apte à adapter la tension de sortie de l'onduleur à la tension de la batterie.

La batterie peut comprendre un ensemble d'éléments de batterie reliés par trois relais de sorte que les éléments de batterie soient connectés en série ou en parallèle.

Le système peut comprendre un système de protection par diode connecté en série avec la batterie.

Le système peut comprendre un premier relais et un deuxième relais disposés entre le réseau d'alimentation électrique et la machine électrique. Le système de charge comprenant trois phases, le premier relais est disposé entre la première et la deuxième phase, le deuxième relais étant disposé entre la deuxième et la troisième phase. Les premier et deuxième relais sont alors aptes à connecter un point neutre en amont de la machine électrique lors d'un fonctionnement en traction et à déconnecter le point neutre afin de rétablir la connexion de la machine électrique au réseau d'alimentation électrique lors d'une charge.

Un autre objet de l'invention est un procédé de charge de la batterie d'un véhicule automobile muni d'au moins une chaine de traction électrique ou hybride. La chaine de traction comprend, lorsque le véhicule est en mouvement, une machine électrique connectée mécaniquement aux roues motrices et connectée électriquement à la batterie par l'intermédiaire d'un onduleur. Le procédé comprend les étapes suivantes, on connecte un réseau d'alimentation électrique directement ou par l'intermédiaire d'un filtre CEM aux phases de la machine électrique série avec l'onduleur, on déclenche la charge en commandant l'onduleur de sorte que de l'énergie soit prélevée sur le réseau d'alimentation électrique à travers la machine électrique et à destination de la batterie, tout en commandant la machine électrique de sorte que son rotor ne soit pas magnétisé afin que la machine électrique ne produise pas de couple, ledit procédé étant caractérisé en ce que pour prélever de l'énergie sur le réseau d'alimentation électrique, on commande à l'onduleur de générer des courants dans la machine électrique caractéristiques d'une rotation de la machine électrique à la fréquence du réseau d'alimentation électrique avec une force électromotrice correspondant à la tension du réseau d'alimentation électrique.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un système de charge de batterie de véhicule automobile selon une première topologie,
- la figure 2 illustre les principaux éléments d'un ensemble d'éléments de batterie,
- les figures 3a et 3b illustrent le fonctionnement de l'ensemble d'éléments de batterie selon les positions des relais, et
- la figure 4 illustre les éléments d'un système de charge de batterie de véhicule automobile selon une deuxième topologie

La nouvelle topologie de système de charge présentée ci-dessous permet une charge à forte puissance mais à un moindre coût par rapport aux systèmes de charge actuels.

Pour cela, des principaux composants de la chaine de traction sont exploités afin de limiter la redondance d'éléments entre la chaine de traction et le système de charge, et de générer des économies de cout. Comme cela est expliqué plus en détail ci-dessous, la machine électrique et l'onduleur la commandant sont utilisés afin de charger la batterie.

Toutefois, le passage d'un mode de charge à un mode de traction dans lequel un couple est généré ou régénéré par la machine électrique implique l'ajout de modifications permettant de modifier le sens de circulation du courant et de protéger certains éléments d'une surcharge.

Par ailleurs, il est également décrit un ensemble d'éléments de batterie dont l'architecture permet d'obtenir une tension de batterie au moins doublée par rapport à l'emploi d'une batterie seule.

Enfin, une topologie alternative est également présentée lorsque la tension de batterie est insuffisante pour un fonctionnement optimal basé sur la première topologie. Dans ce cas, un convertisseur continu-continu est ajouté afin de corriger les différences de tension entre l'onduleur et les batteries.

Même lorsque cette deuxième topologie est employée, des économies de composants sont réalisées puisque le système de charge est fusionné avec la partie électrique de la chaine de traction.

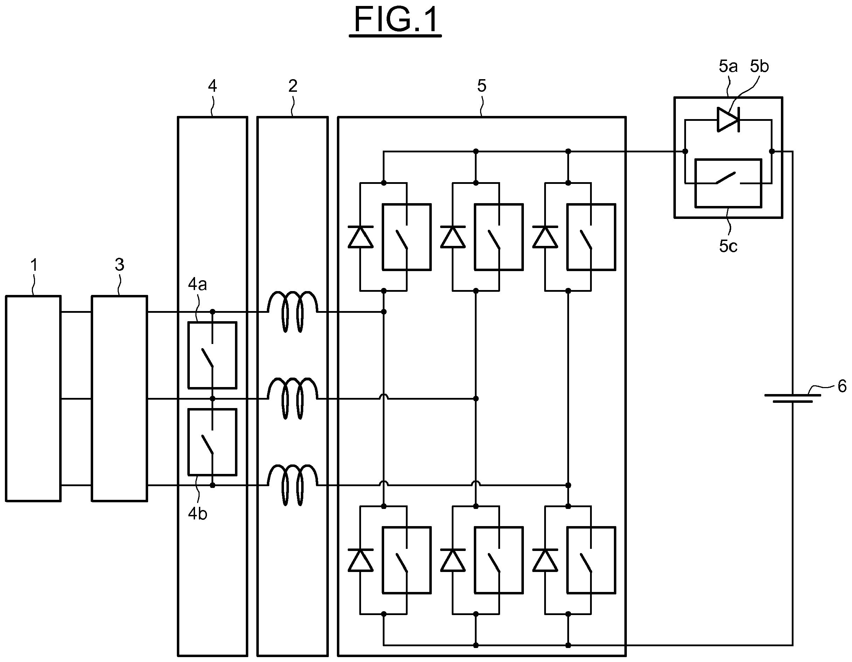

La figure 1 illustre la première topologie. On peut voir un réseau d'alimentation électrique 1 connecté aux phases d'une machine motrice électrique 2 d'un véhicule automobile. La connexion peut être réalisée directement, ou par l'intermédiaire d'un filtre d'entrée 3 pour des besoins de compatibilité électromagnétique (CEM).

Une première modification, référencée 4, implique l'ajout de relais 4a,4b entre les trois phases reliant le réseau d'alimentation 1 triphasé à la machine électrique 2. Cet ajout permet de connecter un point neutre en amont de la machine électrique 2 lors d'un fonctionnement en traction afin de clore le circuit lorsque le véhicule est déconnecté du réseau d'alimentation électrique 1. Ce même ajout permet de déconnecter le point neutre et de rétablir la connexion de la machine électrique 2 au réseau d'alimentation électrique 3 pour la charge.

La machine électrique 2 est connectée en sortie à un onduleur 5, lui-même connecté en sortie à une batterie 6. Un moyen de protection par diode 5a est disposé en entrée de la batterie 6 et constitue une autre modification. Le moyen de protection par diode 5a comprend une diode 5b connectée en parallèle aux bornes d'un relais 5c. Lors de la charge, le relais 5c est ouvert de sorte que l'énergie ne puisse transiter que dans le sens de la charge. Lors du fonctionnement en traction, le relais est fermé de sorte que la batterie puisse fournir de la puissance à la machine électrique et en recevoir lors d'un freinage récupératif.

Ainsi connecté, le réseau 1 va générer une tension typiquement à 50Hz entre phases de la machine électrique 2. Cette tension est équivalente à une force électromotrice (FEM) que génèrerait un rotor équivalent tournant à cette même fréquence électrique. Du point de vue de l'onduleur 5, la machine électrique 2 est une machine tournante en fonctionnement, ce qui permet de calculer un angle équivalent et un flux équivalent. Toutefois, comme le rotor n'est pas magnétisé, aucun couple ne sera créé dans la machine électrique 2, notamment s'il s'agit d'une machine à rotor bobiné.

En considérant cette machine fictive, on peut la commander comme une machine classique triphasée. Pour cela, on utilise l'onduleur 5 pour commander les courants dans chacune des phases.

L'angle électrique équivalent peut être calculé à l'aide d'une détermination par « Phase Loop Lock » effectuée sur le réseau.

La machine fictive est considérée comme une machine tournante triphasée alimentée par des courants sinusoïdaux. Il est donc pertinent d'utiliser la transformée de Park pour en déterminer les équations de commande. Dans l'espace de Park, la machine fictive est modélisée par le système d'équations suivant:

$$\begin{cases} V_d = R_s \cdot I_d + L_d \cdot \dot{I}_d - \omega_r \cdot L_q \cdot I_q \\ V_q = R_s \cdot I_q + L_q \cdot \dot{I}_q + \omega_r \cdot \left( L_d \cdot I_d + \Phi_f \right) \end{cases} \qquad (\text{Eq. 1})$$

Avec :

$V_d$ et $V_q$ = les tensions appliquées sur les deux axes (d,q) du plan de Park de la machine (en Volts)
$I_d$ et $I_q$ = les courants circulant dans la machine sur les deux axes (d,q) du plan de Park (en Ampère)

$R_s$ = la résistance équivalente du stator de la machine (en Ohm)
$L_d$ et $L_q$ = les inductances sur les deux axes (d,q) du plan de Park de la machine (en Henry).
$\omega_r$ = la vitesse de rotation du champ magnétique de la machine (en rad/s).
$\Phi_f$ = le flux généré par les aimants du rotor (en Wb).

Dans le cas de la machine fictive, on peut expliciter certains paramètres, si on considère une alimentation par un réseau triphasé présentant une tension de 230V efficace ou RMS (acronyme anglais pour Root Mean Square) à une fréquence de 50Hz:

- le flux $\Phi_f$ équivalent est d'environ 1,2 Wb.
- la fréquence $\omega_r$ est celle du réseau électrique, soit en France, 314 rad/s (50Hz).
- $L_d$ et $L_q$ seront égaux parce que le réseau est parfaitement équilibré. En d'autres termes, le réseau est équivalent à un rotor à pôles lisses.

En commandant la machine fictive avec le système d'équations (Eq. 1), il est possible de puiser une puissance constante dans le réseau d'alimentation électrique 1 en imposant des courants sinusoïdaux triphasés dans les trois phases par l'intermédiaire de l'onduleur 5. Cette puissance pourra être du même ordre que les puissances disponibles lorsque la machine électrique 2 est utilisée en traction. Par exemple, pour une charge à 43kW, le courant Iq est régulé à 90 A, soit 63A RMS.

En puisant une puissance constante, deux cas de figure se posent, selon que la batterie utilisée permet ou non, d'avoir une tension supérieure à la tension en sortie de l'onduleur. La tension en sortie de l'onduleur est plus élevée que la tension crête entre les phases du réseau. On rappelle que pour un réseau à 230V RMS, la tension crête entre les phases est d'environ 565V.

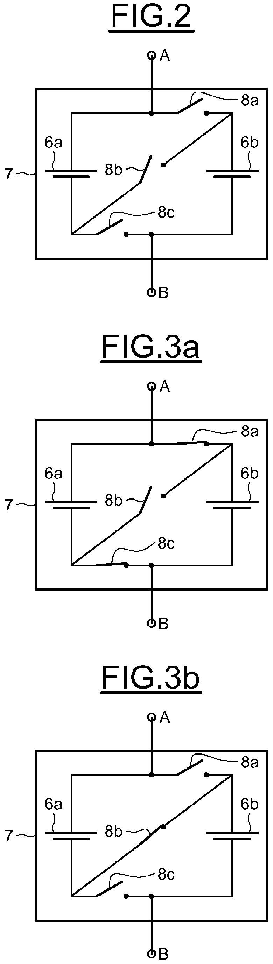

Un premier cas correspond à une tension de batterie supérieure à la tension de l'onduleur. Suivant la tension du réseau d'alimentation électrique et la tension de la batterie, ce cas peut apparaitre spontanément. Toutefois, pour disposer d'une tension de batterie la plus haute possible et éviter de se trouver dans le cas où la tension de batterie est inférieure à la tension de l'onduleur, on propose de remplacer la batterie 6 par un ensemble de plusieurs batteries dont la structure est illustrée par la figure 2. L'ensemble d'éléments de batterie, référencé 7, constitue une batterie, et comprend une entrée A et une sortie B connectées à deux éléments de batterie référencés 6a et 6b. L'entrée A est connectée à la cathode du premier élément de batterie 6a, et à une borne d'un premier relais 8a. L'autre borne du premier relais 8a est reliée à la cathode du deuxième élément de batterie 6b et à une borne d'un deuxième relais 8b. L'anode du premier élément de batterie 6a est connectée à la deuxième borne du deuxième relais 8b et à une borne d'un troisième relais 8c. L'anode du deuxième élément de batterie 6b est connectée à une autre borne du troisième relais 8c et à la sortie B. L'ensemble d'éléments de batterie 7 peut également être réalisé en intervertissant anodes et cathodes de chaque batterie.

Les figures 3a et 3b illustrent le fonctionnement de l'ensemble d'éléments de batterie selon les positions des relais 8a, 8b et 8c.

La figure 3a correspond à l'ensemble d'éléments de batterie selon un premier mode de fonctionnement lorsque le premier relais 8a et le troisième relais 8c sont passant, le deuxième relais 8b étant ouvert.

La figure 3b correspond à l'ensemble d'éléments de batterie selon un deuxième mode de fonctionnement lorsque le premier relais 8a et le troisième relais 8c sont ouverts, le deuxième relais 8b étant passant.

Si on note $U_{nom}$ la tension aux bornes de chacun des éléments de batterie, $Q_{nom}$ la charge de chacune des éléments de batterie, $U_{AB}$ la tension aux bornes de l'ensemble des éléments de batterie et $Q_{AB}$ la charge entre les bornes de l'ensemble des éléments de batterie, on obtient le système d'équations suivantes pour l'ensemble d'éléments de batterie selon le premier mode de fonctionnement

$$\begin{cases} U_{AB} = U_{nom} \\ Q_{AB} = 2 \cdot Q_{nom} \end{cases} \qquad (Eq.\ 1)$$

On obtient le système d'équations suivantes pour l'ensemble d'éléments de batterie selon le deuxième mode de fonctionnement.

$$\begin{cases} U_{AB} = 2 \cdot U_{nom} \\ Q_{AB} = Q_{nom} \end{cases} \qquad (Eq.\ 2)$$

Ainsi, avec trois relais, on peut passer de deux éléments de batterie en parallèle à deux éléments de batterie en série et ainsi doubler la tension en sortie de la batterie.

Ainsi, par l'application de la première topologie, il est possible de fusionner le système de charge de la batterie d'un véhicule automobile électrique ou hybride avec une partie significative des composants de la chaine de traction. La première topologie est applicable dès que la tension en sortie de l'onduleur est inférieure à la tension de batterie.

La batterie comprenant un ensemble d'éléments de batterie également décrit permet de corriger la tension de batterie perçue par l'onduleur dans le cas où la tension de batterie serait trop basse.

Il apparait donc, au travers de la description de la première topologie, que l'on peut réguler les courants de phase, au travers de la commande de la machine électrique afin de charger la batterie, en stipulant notamment la puissance de charge.

Le système de charge peut également fonctionner comme un correcteur de facteur de puissance (acronyme PFC de l'anglais « Power Factor Correction ») en corrigeant le facteur de puissance de l'installation.

Dans un deuxième cas, la tension de batterie est inférieure à la tension de l'onduleur. C'est le cas actuellement pour la plupart des véhicules électriques. En effet, la tension de batterie est généralement comprise entre 300 et 400V, soit nettement inférieure à la tension en sortie de l'onduleur. On rappelle que la tension maximale en sortie de l'onduleur est supérieure à la tension crête entre phases du réseau, environ égale à 565V.

Si de plus, il n'est pas possible ou souhaité d'employer la batterie comprenant l'ensemble d'éléments de batterie décrit ci-dessus, la topologie illustrée par la figure 1, appliquée à une batterie dont la tension est comprise entre 300 et 400V génèrerait des courants nécessairement très élevés. Un rapide calcul montre que des courants de l'ordre de quelques milliers d'ampères circuleraient dans chaque phase si la machine était en court-circuit, ce qui correspond à un mode de sécurité de la machine.

En plus d'être dangereux, de tels niveaux de courant peuvent endommager la machine électrique et l'onduleur.

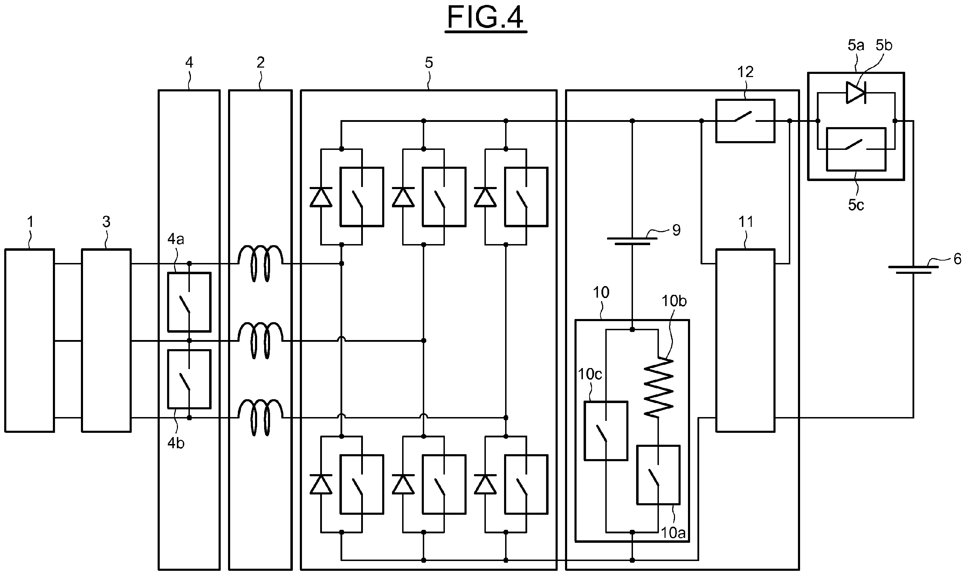

Pour remédier à cette situation, on propose une configuration alternative du système de charge. Cette configuration, illustrée par la figure 4, diffère de celle illustrée par la figure 1 de par la présence d'un convertisseur continu-continu et d'une capacité.

Plus précisément, les sorties de l'onduleur 5 sont reliées à une capacité 9 connectée en série avec un circuit 10 de pré-charge. L'entrée et la sortie du circuit 10 de pré-charge sont connectées à deux branches parallèles. Une première branche comprend un premier relais 10a en série avec une résistance 10b. La deuxième branche comprend uniquement un deuxième relais 10c.

Les sorties de l'onduleur 5 sont également connectées aux entrées du convertisseur continu-continu 11. Un relais 12 est connecté en parallèle du convertisseur continu-continu 11. Les sorties du convertisseur continu-continu 11 sont connectées à la batterie 6 en série avec un moyen de protection par diode 5a.

Le moyen de protection par diode 5a comprend une diode 5b connectée en parallèle aux bornes d'un relais 5c. Lors de la charge, le relais 5c est ouvert de sorte que l'énergie ne puisse transiter que dans le sens de la charge. Lors du fonctionnement en traction, le relais est fermé de sorte que la batterie puisse fournir de la puissance à la machine électrique et en recevoir lors d'un freinage récupératif.

Le relais 12 permet de court-circuiter le convertisseur continu-continu 11 lorsque la machine électrique 2 fonctionne en traction, alimentée par la batterie 6.

Dans la topologie illustrée par la figure 4, deux niveaux de haute tension existent en amont et en aval du convertisseur continu-continu 11. Il est donc pertinent d'utiliser deux circuits de pré-charge pour charger, d'une part les capacités de filtrage de la batterie, et d'autre part la capacité en sortie de l'onduleur.

Les capacités de filtrage sont généralement connectées en parallèle de la batterie afin de filtrer le courant de charge. Elles ne sont pas représentées sur les figures 1 et 4.

La capacité 9 connectée en sortie de l'onduleur 5 subit une tension au moins égale à la tension de crête entre phases. Il est donc nécessaire qu'elle soit chargée à au moins 565V, de préférence au moins 600V.

Le circuit de pré-charge 10, décrit plus haut, fonctionne d'une façon familière à l'homme du métier.

Pour charger lentement la capacité, on ferme le premier relais 10a tout en maintenant le deuxième relais ouvert 10c. Le courant de charge est réduit par la résistance 10b ce qui ralenti la charge de la capacité 9. La valeur de la résistance 10b dépend des dimensions et des valeurs des composants du circuit. Toutefois, la valeur de la résistance 10b est généralement de quelques ohms pour un délai de charge de quelques centaines de millisecondes.

Une fois la capacité chargée, on ferme le deuxième relais 10c et on ouvre le premier relais 10a pour un fonctionnement avec des pertes minimales.

Dans ce cas, la tension maximale à la sortie de l'onduleur 5 est abaissée par le convertisseur continu-continu 11 à une valeur inférieure à la tension de la batterie 6. Le système peut donc fonctionner avec des courants plus faibles que ceux qui existeraient s'il n'y avait pas de convertisseur continu-continu

Par ailleurs, il est à noter que l'onduleur est réversible. Comme la machine fictive est commandée via l'onduleur de traction, il apparait que la topologie de système de charge présentée ci-dessus est réversible.

Il est ainsi possible d'utiliser cette topologie pour fournir de l'énergie au réseau, notamment pour permettre de lisser les creux et les pics de consommation.

**Revendications**

1. Système de charge de la batterie (6) d'un véhicule automobile muni d'au moins une chaine de traction électrique ou hybride,
la chaine de traction comprenant, lorsque le véhicule est en mouvement, une machine électrique (2) connectée mécaniquement aux roues motrices et connectée électriquement à la batterie (6) par l'intermédiaire d'un onduleur (5),
le système de charge comprenant, lorsque le véhicule est en charge, la machine électrique (2) et l'onduleur (5) de la chaine de traction ainsi qu'un système de commande apte à commander l'onduleur (5) de sorte que de l'énergie soit prélevée d'un réseau d'alimentation électrique (1) à travers la machine électrique (2) et à destination de la batterie (6),
**caractérisé par le fait que** ladite commande se fasse en générant des courants dans la machine électrique (2) caractéristiques d'une rotation de la machine électrique (2) à la fréquence du réseau d'alimentation électrique (1) avec une force électromotrice correspondant à la tension du réseau d'alimentation électrique (1), tout en étant apte à commander la machine électrique (2) de sorte à ne pas magnétiser son rotor, le réseau étant connecté directement ou par l'intermédiaire d'un filtre CEM aux phases de la machine électrique pour la charge, et déconnecté lors d'un fonctionnement en traction.

2. Système selon la revendication 1, comprenant un convertisseur continu-continu (11) disposé entre l'onduleur (5) et la batterie (6), et une capacité (9) connectée en parallèle du convertisseur continu-continu (11), le convertisseur continu-continu (11) étant apte à adapter la tension de sortie de l'onduleur (5) à la tension de la batterie (6).

3. Système selon la revendication 1, dans lequel la batterie (6) comprend un ensemble d'éléments de batterie (6a,6b) reliés par trois relais (8a,8b,8c) de sorte que les éléments de batterie (6a,6b) soient connectés en série ou en parallèle.

4. Système selon l'une quelconque des revendications précédentes, comprenant un système de protection par diode (5a) connecté en série avec la batterie (6).

5. Système selon l'une quelconque des revendications précédentes, comprenant un premier relais (4a) et un deuxième relais (4b) disposés entre le réseau d'alimentation électrique (1) et la machine électrique (2),
le système de charge comprenant trois phases, le premier relais (4a) étant disposé entre la première et la deuxième phase, le deuxième relais (4b) étant disposé entre la deuxième et la troisième phase,
les premier et deuxième relais (4a,4b) étant aptes à connecter un point neutre en amont de la machine électrique (2) lors d'un fonctionnement en traction et à déconnecter le point neutre afin de rétablir la connexion de la machine électrique (2) au réseau d'alimentation électrique (3) lors d'une charge.

6. Procédé de charge de la batterie d'un véhicule automobile muni d'au moins une chaine de traction électrique ou hybride,
la chaine de traction comprenant, lorsque le véhicule est en mouvement, une machine électrique (2) connectée mécaniquement aux roues motrices et connectée électriquement à la batterie (6) par l'intermédiaire d'un onduleur (5),
le procédé comprenant les étapes suivantes,
on connecte un réseau d'alimentation électrique (1) directement ou par l'intermédiaire d'un filtre CEM aux phases de la machine électrique en série avec l'onduleur (5), on déclenche la charge en commandant l'onduleur (5) de sorte que de l'énergie soit prélevée sur le réseau d'alimentation électrique (1) à travers la machine électrique (2) et à destination de la batterie (6), tout en commandant la machine électrique (2) de sorte que son rotor ne soit pas magnétisé afin que la machine électrique (2) ne produise pas de couple,
ledit procédé étant **caractérisé en ce que** pour prélever de l'énergie sur le réseau d'alimentation électrique (1), on commande à l'onduleur (5) de générer des courants dans la machine électrique (2) caractéristiques d'une rotation de la machine électrique (2) à la fréquence du réseau d'alimentation électrique (1) avec une force électromotrice correspondant à la tension du réseau d'alimentation électrique (1).

**Patentansprüche**

1. System zum Laden der Batterie (6) eines Kraftfahrzeugs, das mit wenigstens einem elektrischen oder hybriden Antriebsstrang ausgestattet ist,

wobei der Antriebsstrang, wenn das Fahrzeug in Bewegung ist, eine elektrische Maschine (2) umfasst, die mechanisch mit den Antriebsrädern verbunden ist und elektrisch über einen Wechselrichter (5) mit der Batterie (6) verbunden ist,

wobei das Ladesystem, wenn sich das Fahrzeug im Ladebetrieb befindet, die elektrische Maschine (2) und den Wechselrichter (5) des Antriebsstranges sowie ein Steuerungssystem umfasst, das geeignet ist, den Wechselrichter (5) derart anzusteuern, dass Energie aus einem elektrischen Versorgungsnetz (1) über die elektrische Maschine (2) entnommen und der Batterie (6) zugeführt wird, **dadurch gekennzeichnet, dass** die Steuerung erfolgt, indem Ströme in der elektrischen Maschine (2) erzeugt werden, die für eine Rotation der elektrischen Maschine (2) bei der Frequenz des elektrischen Versorgungsnetzes (1) mit einer der Spannung des elektrischen Versorgungsnetzes (1) entsprechenden elektromotorischen Kraft charakteristisch sind, wobei sie gleichzeitig geeignet ist, die elektrische Maschine (2) derart anzusteuern, dass ihr Rotor nicht magnetisiert wird, wobei das Netz für das Laden direkt oder über ein EMV-Filter mit den Phasen der elektrischen Maschine verbunden ist und während eines Traktionsbetriebs von ihnen getrennt ist.

2. System nach Anspruch 1, welches einen Gleichstrom-Gleichstrom-Wandler (11), der zwischen dem Wechselrichter (5) und der Batterie (6) angeordnet ist, und eine zu dem Gleichstrom-Gleichstrom-Wandler (11) parallelgeschaltete Kapazität (9) umfass, wobei der Gleichstrom-Gleichstrom-Wandler (11) geeignet ist, die Ausgangsspannung des Wechselrichters (5) an die Spannung der Batterie (6) anzupassen.

3. System nach Anspruch 1, wobei die Batterie (6) einen Satz von Batteriezellen (6a, 6b) umfasst, die durch drei Relais (8a, 8b, 8c) derart verbunden sind, dass die Batteriezellen (6a, 6b) in Reihe oder parallelgeschaltet sind.

4. System nach einem der vorhergehenden Ansprüche, welches ein auf einer Diode basierendes Schutzsystem (5a) umfasst, das mit der Batterie (6) in Reihe geschaltet ist.

5. System nach einem der vorhergehenden Ansprüche, welches ein erstes Relais (4a) und ein zweites Relais (4b) umfasst, die zwischen dem elektrischen Versorgungsnetz (1) und der elektrischen Maschine (2) angeordnet sind, wobei das Ladesystem drei Phasen umfasst, wobei das erste Relais (4a) zwischen der ersten und der zweiten Phase angeordnet ist, wobei das zweite Relais (4b) zwischen der zweiten und der dritten Phase angeordnet ist, wobei das erste und das zweite Relais (4a, 4b) geeignet sind, während eines Traktionsbetriebs einen Neutralpunkt der elektrischen Maschine (2) vorzuschalten und während eines Ladebetriebs die Verbindung mit dem Neutralpunkt zu trennen, um die Verbindung der elektrischen Maschine (2) mit dem elektrischen Versorgungsnetz (3) wiederherzustellen.

6. Verfahren zum Laden der Batterie eines Kraftfahrzeugs, das mit wenigstens einem elektrischen oder hybriden Antriebsstrang ausgestattet ist,
wobei der Antriebsstrang, wenn das Fahrzeug in Bewegung ist, eine elektrische Maschine (2) umfasst, die mechanisch mit den Antriebsrädern verbunden ist und elektrisch über einen Wechselrichter (5) mit der Batterie (6) verbunden ist,
wobei das Verfahren die folgenden Schritte umfasst:

ein elektrisches Versorgungsnetz (1) wird direkt oder über ein EMV-Filter mit den Phasen der elektrischen Maschine verbunden und mit dem Wechselrichter (5) in Reihe geschaltet,
der Ladevorgang wird ausgelöst, indem der Wechselrichter (5) derart angesteuert wird, dass Energie aus dem elektrischen Versorgungsnetz (1) über die elektrische Maschine (2) entnommen und der Batterie (6) zugeführt wird, wobei gleichzeitig die elektrische Maschine (2) derart angesteuert wird, dass ihr Rotor nicht magnetisiert wird, damit die elektrische Maschine (2) kein Drehmoment erzeugt,
wobei das Verfahren **dadurch gekennzeichnet ist, dass**, um Energie aus dem elektrischen Versorgungsnetz (1) zu entnehmen, der Wechselrichter (5) angesteuert wird, um Ströme in der elektrischen Maschine (2) zu erzeugen, die für eine Rotation der elektrischen Maschine (2) bei der Frequenz des elektrischen Versorgungsnetzes (1) mit einer der Spannung des elektrischen Versorgungsnetzes (1) entsprechenden elektromotorischen Kraft charakteristisch sind.

**Claims**

1. System for charging the battery (6) of a motor vehicle provided with at least one electric or hybrid power train, the power train comprising, when the vehicle is in motion, an electric machine (2) connected mechanically to the

7

drive wheels and connected electrically to the battery (6) via an inverter (5),

the charging system comprising, when the vehicle is charging, the electric machine (2) and the inverter (5) of the power train as well as a control system capable of controlling the inverter (5) such that the energy is taken from an electric power supply network (1) through the electric machine (2) and to the battery (6), **characterized in that** said control is implemented by generating currents in the electric machine (2) characteristic of a rotation of the electric machine (2) at the frequency of the electric power supply network (1) with an electromotive force corresponding to the voltage of the electric power supply network (1), while being capable of controlling the electric machine (2) so as to not magnetize its rotor, the network being connected directly or via an EMC filter to the phases of the electric machine for the charging, and disconnected when operating under power.

2. System according to Claim 1, comprising a DC-DC converter (11) arranged between the inverter (5) and the battery (6), and a capacitor (9) connected in parallel to the DC-DC converter (11), the DC-DC converter (11) being capable of matching the output voltage of the inverter (5) to the voltage of the battery (6).

3. System according to Claim 1, in which the battery (6) comprises a set of battery elements (6a, 6b) linked by three relays (8a, 8b, 8c) such that the battery elements (6a, 6b) are connected in series or in parallel.

4. System according to any one of the preceding claims, comprising a diode protection system (5a) connected in series with the battery (6).

5. System according to any one of the preceding claims, comprising a first relay (4a) and a second relay (4b) arranged between the electric power supply network (1) and the electric machine (2), the charging system comprising three phases, the first relay (4a) being arranged between the first phase and the second phase, the second relay (4b) being arranged between the second phase and the third phase,

the first and second relays (4a, 4b) being capable of connecting a neutral point upstream of the electric machine (2) during operation under power and of disconnecting the neutral point in order to reestablish the connection of the electric machine (2) to the electric power supply network (3) during charging.

6. Method for charging the battery of a motor vehicle provided with at least one electric or hybrid power train,

the power train comprising, when the vehicle is in motion, an electric machine (2) connected mechanically to the drive wheels and connected electrically to the battery (6) via an inverter (5),

the method comprising the following steps,

an electric power supply network (1) is connected directly or via an EMC filter to the phases of the electric machine in series with the inverter (5), the charge is triggered by controlling the inverter (5) such that the energy is taken from the electric power supply network (1) through the electric machine (2) and to the battery (6), while controlling the electric machine (2) such that its rotor is not magnetized in order for the electric machine (2) not to produce any torque,

said method being **characterized in that**, to take energy from the electric power supply network (1), the inverter (5) is ordered to generate currents in the electric machine (2) characteristic of a rotation of the electric machine (2) at the frequency of the electric power supply network (1) with an electromotive force corresponding to the voltage of the electric power supply network (1).

# FIG.1

## FIG.2

## FIG.3a

## FIG.3b

FIG.4

**EP 2 992 585 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2406098 A
- US 20120235605 A
- US 2013069492 A1

**Littérature non-brevet citée dans la description**

- **SAEID HAGHBIN et al.** *An Isolated High-Power Integrated Charger in Electrified-Vehicle Applications*